# EUROPEAN PATENT SPECIFICATION

(11) **EP 3 367 191 B1**
(45) Date of publication and mention of the grant of the patent: **30.12.2020**
(21) Application number: 18156954.2
(22) Date of filing: 15.02.2018
(51) Int. Cl.: G05B 19/4069, G05B 19/4093

(54) **A METHOD OF ASSESSING A CUTTING PROCESS**
VERFAHREN ZUR BEWERTUNG EINES SCHNEIDVORGANGS
PROCÉDÉ D'ÉVALUATION D'UN PROCESSUS DE COUPE

(30) Priority: 22.02.2017 EP 17157297
(43) Date of publication of application: 29.08.2018
(73) Proprietor: Canon Production Printing Holding B.V., 5914 HH Venlo (NL)
(72) Inventor: REGEP, Dan M., 5914 CA Venlo (NL); PETROV, Deian, 5914 CA Venlo (NL)
(74) Representative: Canon Production Printing IP Department

(56) References cited:
- WO-A1-2015/126266
- WO-A1-2016/065492
- US-A1- 2002 092 389

## Description

The present invention relates to a method of assessing a scheduled process of cutting a sheet that is fixed on a flatbed of a cutter, along a cut path that is specified by electronic cut path data.

When a media sheet, such as a sheet of paper, cardboard or plastic, is to be cut on a flatbed cutter, the media type, the fixing method, the tooling, the cutting speed, and the cut path and cut sense are parameters that determine whether or not unwanted cut artefacts will be produced and hence whether the media can be cut as expected or will be damaged in the cut process. For example, when the sheet to be cut is a thin woven fabric, vinyl or any other media that is difficult to attach on a vacuum table, or when the media requires a high cutting force for being cut with a given tool, or when the media has a low tear strength, there is a risk that the sheet will be bent or warped or torn or shifted at a certain stage in the cut process, so that cut artefacts are produced which degrade the quality of the cut product or may be so severe that the product has to be discarded. A cutting tool may wear or be damaged in the cut process which also leads to discarding said cut media.

US 2002/0092389 describes a method and a system of cutting parts from sheet material comprising a numerically-controlled cutting system having a cutting tool for cutting along a path.

WO 2016/065492 describes a method for part analytics regarding the quality, the machining process and preferably the engineering process, of a workpiece machined by at least one CNC machine.

In order to achieve a high production yield, a high product quality and avoid scrapping expensive media, an operator of a cutter will tend to foresee and prevent such cut artifacts beforehand by diligently choosing the cut parameters and carefully tuning the cut path. This, however, requires a substantial amount of experience and skill, so that undesired artefacts can not always be avoided.

It is therefore an object of the invention to assist an operator of a cutter in predicting whether or not cut artefacts are likely to occur.

In order to achieve this object, the method according to the invention is characterized by the steps of:
a) translating the cut path data into a regularized cut path that is composed of discrete simulated cutting steps and approximates the specified cut path;
b) determining a sequence in which the cutting steps are to be performed in a simulated cutting process; and
c) for each simulated cutting step:
   c1) defining a standardized cutting problem by:
      c1a) specifying a standard environment on a portion of a sheet surrounding a location of the simulated cutting step;
      c1b) identifying simulated cutting steps contained in the environment and preceding the present cutting step in the sequence of simulated cutting steps; and
      c1c) specifying cutting parameters including: sheet parameters indicating properties of the sheet to be cut; fixing parameters indicating properties of a fixing system for fixing the sheet on the flatbed; and tooling parameters indicating properties of a cutting tool to be used in the cutting step; and
   c2) determining a likelihood that a cut artefact will be produced in a physical cutting step that corresponds to the simulated cutting step, the likelihood being determined by a digital predictor that extrapolates a result of the simulated cutting step considering the identified simulated cutting steps contained in the environment and at least part of the specified cutting parameters.

The present invention is based on the idea that the potentially infinite variety of scenarios that may be encountered in physical cutting processes can be classified from a finite number of standard scenarios for which it is known or may be determined by experiment whether or not undesired cut artefacts are to be expected. In particular, the invention takes advantage of the fact that the behavior of a sheet in a particular cutting situation will depend mainly on local properties of the sheet, the system for fixing the sheet on the flatbed, the cutting tool type and wear, and the local configuration of the cut or cuts that has or have been made already in the immediate vicinity of the point where the sheet is presently being cut. Even in such a limited vicinity or environment of a cutting step, the possible configurations of physical cut paths form a continuum of possible options. However, it is possible to reduce the variety of situations to be considered to a finite set of distinct scenarios by discretizing the configuration of the path in the local environment. Consequently, an automated process may be employed for approximating the desired physical cut path by a simulated cut path which consists of a sequence of discrete cutting steps each of which can be identified by a finite number of parameters, so that the physical cutting problem to be considered can be classified into a finite number of standardized cutting problems each of which is specified by a combination of one of a finite number of configurations of the discrete simulated cut path in the local environment and a number of applicable values of other cutting parameters such as sheet parameters, fixing parameters and tooling parameters.

The experience and knowledge of human cutter operators may than be formalized by establishing a digital predictor that is arranged to extrapolate the expected cut result of a cut step from a set of cut trials. The digital predictor is arranged such that the predicted results on said trials substantially match the physical cut results with a high precision and recall. Thus, for any cutting problem, the expected result may be inferred by the digital predictor from a set of input features comprising the current simulated cutting step, the previously simulated cutting steps from the vicinity and at least part of the cutting parameters.

More specific optional features of the invention are indicated in the dependent claims. Considering an environment of a location where a simulated cutting step is to be performed, it is natural that the configuration of the cut path along which the sheet has been cut in the preceding cutting steps in this environment has an important impact on the behavior of the sheet, because the capability of the fixing system to hold the sheet in a flat state on the flatbed depends critically upon the point where the cutting tool exerts its cutting force onto the sheet, the direction of the cutting force, and the configuration of the cut line along which the sheet has been severed already. The main reason is that a line where the sheet has been severed restricts the effectiveness with which a support point where the sheet is fixed on the flatbed can contribute to holding the sheet in place in a position beyond the cut line.

According to the invention, the configuration of the cutting steps already completed, the so-called cut line configuration, constitutes one of the features that is important for defining the standardized cutting problem. Depending upon the size of the standard environment, this feature may be a vector with a relatively high dimension, and, as a person skilled in the art of prediction algorithms will notice, a number of cut trials required for arranging a digital predictor capable to extrapolate such a complex process having the high input dimensionality will also be high which is prohibitive considering the wasted media price and time required for the trials.

According to the invention, the amount of data may be reduced by subjecting the cut line configuration to a so-called boundary function which maps this configuration onto a feature which is a vector with a lower number of dimensions or possibly even a single number. For example, such a boundary function may count the number of support points where the sheet is fixed on the bed in the standard environment, with the constraint that the support point is not separated from the location of the present cutting step by a line where the sheet has been severed already. In another example, the support points may be weighted or distinguished on the basis of their distance from the location of the present cutting step.

In another embodiment, the media to be cut has isomorphic properties and allows to take advantage of symmetries between cutting problems. For example, if two standardized cutting problems are different from one another but can be transformed one into the other by a symmetry transformation such as a rotation or reflection, it will be clear that the physical behavior of the sheet in these cutting problems will be the same (at least as long as the sheet is isotropic). Consequently, it is sufficient to store the expected results only for one of these standardized cutting problems or, equivalently, for a class of standardized cutting problems which are linked to each other by a symmetry group.

The invention also relates to a method of creating feature vectors from cut trials to be used for arranging the digital predictor according to any of the preceding claims, the feature vectors to be used in step c2) of the method described above, said method comprising the steps of:
- scheduling a test cutting operation;
- applying the steps a), b) and c1) as described above to the test cutting process; performing a physical cutting process on the basis of the scheduled test cutting process; and
- assessing the result of the physical cutting process and storing the result in a database record for the standardized cutting problem as defined in step c1).

The invention also relates to a cutting system comprising a cutter, a flatbed for fixing a sheet to be cut by a cutter, a workstation, a database, a network and a number of software modules implemented in the workstation, the software modules arranged to execute a method according to the invention.

Embodiment examples will now be described in conjunction with the drawings, wherein:
- Fig. 1: is a perspective view of a cutting system to which the invention is applicable;
- Fig. 2: is a block diagram of the cutting system;
- Fig. 3a-b: is an example of a scheduled cut path;
- Figs. 4 and 5: show a detail of the cut path shown in Fig. 3 along with a respective raster for discretizing the cut path;
- Fig. 6: shows a physical cut path corresponding to the detail shown in Fig. 4;
- Fig. 7: shows a simulated cut path obtained by regularizing the cut path shown in Fig. 6;
- Fig. 8: shows a detail of the regularized cut path shown in Fig. 7 as well a sequence of simulated cutting steps along that cut path describing a cut line configuration;
- Fig. 9: is a diagram illustrating a construction of a feature that indicates a cut line configuration;
- Figs. 10 and 11: show cut path configurations obtained by applying symmetry transformations to the cut path configuration shown in Fig. 9;
- Fig. 12: shows an example of a database record for a standardized cutting problem;
- Figs. 13 and 14: are diagrams illustrating boundary functions for obtaining alternative features for describing the cut line configuration shown in Fig. 9;
- Fig. 15: a flow diagram illustrating essential steps of a method according to the invention;

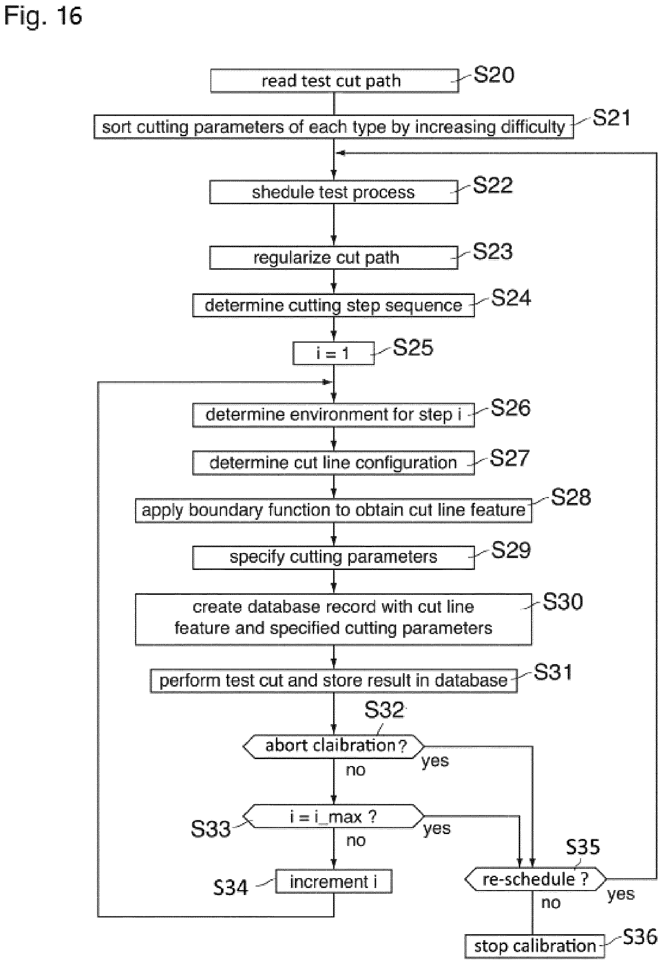

- Fig. 16: a flow diagram illustrating essential steps of a method of creating records in the database, as shown in Fig. 12; and
- Fig. 17: shows a number of test programs having a test cut path to be used for calibration.

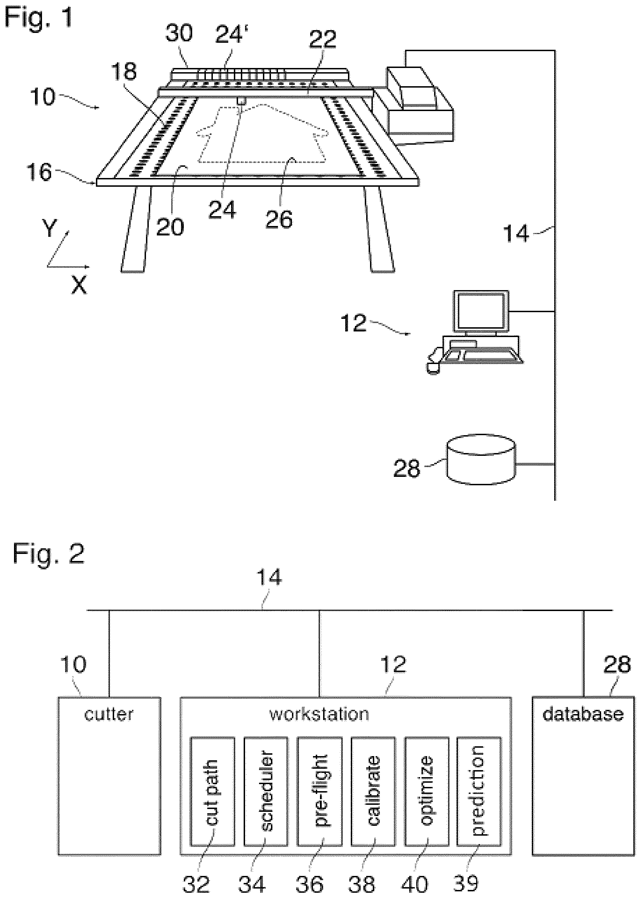

Fig. 1 shows a cutting system comprising a cutter 10 and a workstation 12 connected to the cutter via a network 14 and permitting to compile and edit cut jobs to be executed with the cutter 10.

The cutter 10 has a flatbed 16 with a rectangular flatbed surface in which a regular pattern of suction holes 18 has been formed. The suction holes 18 are connected to a vacuum source, so that a sheet 20 to be cut, e.g. a rectangular sheet of paper, can be sucked against the flatbed surface so as to be immobilized on the flatbed.

A gantry 22 extends across the flatbed 16 in a main scanning direction X and is itself movable relative to the flatbed in a sub-scanning direction Y. A cutting tool 24 is movable along the gantry 22 in the main scanning direction X and is controlled to cut the sheet 20 along a pre-defined cut path 26.

The movements of the gantry 22 and of the cutting tool 24 and the operations of the cutting tool are controlled by a controller which may be implemented in the cutter 10 or in the workstation 12.

As is further shown in Fig. 1, a number of alternative cutting tools 24' are stored in a bank 30 disposed along one side of the flat bed 16, so that the gentry 22 may be moved to the bank 30 for exchanging the cutting tool 24 against another one, if required.

In the example shown, a database 28 is connected to the workstation 12 and the cutter 10 via the network 14. The database 28 stores empiric data on the observed behavior of sheets of different types when cut with a variety of cutting tools in a variety of different cutting scenarios. As will be described in detail below, the data stored in the database 28 are used in the method according to the invention for predicting whether a scheduled cutting process can be expected to yield an acceptable result or is likely to produce cut artefacts resulting in a cut product of inacceptable quality.

Fig. 2 illustrates the cutting system comprising the cutter 10, the workstation 12, the database 28 and the network 14 in the form of a block diagram and shows a number of software modules implemented in the workstation 12. In the example shown, these modules comprise a cut path module 32, a scheduler 34, a pre-flight module 36, a calibration module 38, a digital predictor 39 and an optimization module 40.

The cut path module 32 is an application for generating cut path data which describe the geometry of a cut path such as the cut path 26 shown in Fig. 1. As an alternative, the cut path data may be downloaded from a remote source.

The scheduler 34 is a module for creating or editing a cut job in which a sheet such as the sheet 20 shown in Fig. 1 is cut along the cut path 26 that has been specified in the cut path module 32. For example, the scheduler 34 specifies the type of media that constitute the sheet 20, the cutting tool or cutting tools 24, 24' to be used for cutting the sheet, and a sequence of cutting operations that will result in the sheet 20 being cut along the cut path 26.

In the example shown in Fig. 1, the cut path 26 is a closed path, and the sequence of cutting operations may specify that the cutting tool 24 follows the cut path 26 either in clock sense or counter-clock sense. However, there is also an option to divide the cut path 26 into a plurality of segments and to specify different directions of movement of the cutting tool for the different segments, so that the cutting tool would be moved along one segment of the cut path, then the cutting operation would be interrupted and the cutting tool would be moved to another point of the cut path where another section begins, and the cutting operation would then be resumed to cut this other segment. Thus, even if the media type and the selection of cutting tools have been fixed, there still exists an infinity (a continuum) of different cutting options for one and the same cut path 26.

The scheduler may also specify different fixing methods to be applied for locally fixing the sheet 20 on the flatbed 16. In the example shown in Fig. 1, the only available fixing method is sucking the sheet 20 against the flatbed surface by drawing-in air through the suction holes 18. Consequently, the only variable parameter relating to the fixing method is the suction pressure with which air is drawn-in through the various suction holes 18. In other embodiments, however, different fixing methods may be available. For example, the sheet 20 might be fixed by adhering to a velcro-like surface of the flatbed 16 or a somewhat sticky surface of the flatbed. Jet another class of fixing methods might employ punches which are carried on the cutting tool 24 and locally press the sheet 20 against the flatbed surface.

It will be understood that, depending upon the media type of the sheet 20, the type of cutting tool 24 being used, the cutting speed and the like, the sheet 20 may tend to be stretched or to bend (deformations within the plane of the sheet) or to bulge (deformation in the direction normal to the plane of the flat bed) or to be torn apart, if not all parts of the sheet in the vicinity of the present operating point of the cutting tool are fixed on the flatbed surface with sufficient force. The tendency of the sheet to show such cut artefacts will also depend critically on the geometry of the cut path 26 and the sequence in which the cutting operations along that cut path are performed, because the resistance of the sheet to the various types of deformation will be different when the sheet has been weakened locally by cuts that have been formed earlier.

The pre-flight module 36 shown in Fig. 2 is at the core of the present invention and is a module which assists an operator in predicting whether or not cut artefacts must be expected for the cutting process as scheduled by the scheduler 34. To that end, the pre-flight module 36 refers to the digital predictor 39 that is preferably arranged considering the empirical data that are stored in the database 28.

For the time being, it shall be assumed that the data in the database 28 have been established earlier. However, a method of creating the database 28 or adding records to that database will also be disclosed. The calibration module 38 shown in Fig. 2 is provided for at least partly automating this process.

When a cutting process has been scheduled in the scheduler 34 and has been assessed by the pre-flight module 36 and it turns out that cut artefacts must be expected, an operator will attempt to avoid the cut artefacts and nevertheless obtain the desired cut product by modifying the scheduled cutting process, e. g. by selecting a different cutting tool, selecting a different fixing method, if possible, and, in the first place, by modifying the sequence of cutting operations.

The predication module 39 shown in Fig. 2 is arranged to predict with high precision and recall the outcome of a simulated cutting step corresponding to a physical cutting step that is part of a scheduled cut operation from the cut path 26. The pre-flight module 36 uses the prediction module 39 for validating scheduled cut operations of the cut path 26. Further, the prediction module 39 is preferably arranged to adaptively learn from a set of cut trials comprising standard cutting problems and, to become capable to extrapolate new cutting problems. As a person skilled in the art of prediction algorithms would notice, in a preferred embodiment the prediction module 39 may implemented by means of supervised learning techniques such as Neural Networks classifiers. Thus, although the internals of the prediction module 39 are not part of the present invention as they are part of the state of the art, it is an object of this invention to propose techniques allowing to reduce the number of trials required for training said module and reduce the training time and the media waste required.

The optimization module 40 shown in Fig. 2 is provided for assisting the operator in this task by proposing modifications in the scheduled cutting process on the basis of a collection of heuristic rules. These heuristic rules may comprise well known techniques for modifying the schedule of a cut path such as changing the order of cut operations and/or changing their sense, and/or choosing a different set of cut operations having different start and end points and/or simply leaving as uncut at least part of said cutting operations that are found to be error prone by the pre-flight module 36. Also, the optimization module 40 may be arranged to modify said schedule to consider using a different (better) tooling, a different (lower) cut speed, another media thickness or type or, to change the fixing method and parameters. Said rules and optimization strategies are not part of this disclosure. It will be understood however that the scheduler 34, the pre-flight module 36 and the optimization module 40 will work in conjunction for scheduling cut paths, simulating and assessing the results of said scheduled cut paths and, for upgrading said cut paths and program parameters so that detected problems are avoided.

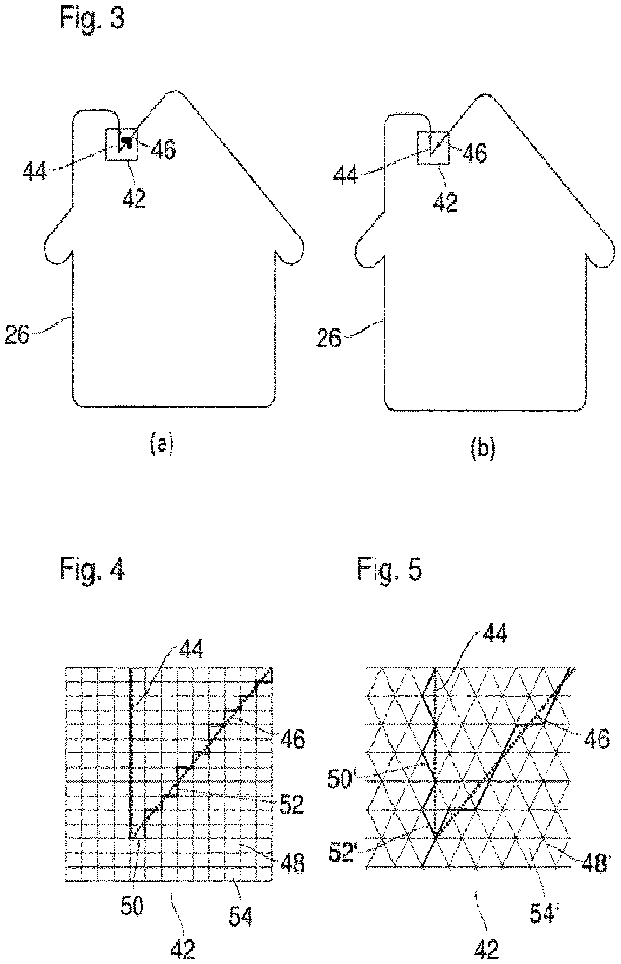

These concepts will now be explained in greater detail by reference to Figs. 3 to 14.

Fig. 3a-b shows the cut path 26 that had already be shown in Fig. 1 and highlights a detail 42 which may be expected to be critical in terms of cut artefacts. In the area of the detail 42, two segments 44, 46 of the cut path form an acute angle with one another. As a consequence, a tip portion of the sheet 20 bounded by the two segments 44 and 46 can be fixed to the flatbed only with limited force, so that it is likely that this tip portion of the sheet will be bulged or crumpled by the force exerted by the cutting tool, especially when the cutting tool follows the cut path 26 in uniform sense as shown in Fig. 3a. On the other hand, if the two segments 44, 46 of the cut path are cut in opposite directions, as indicated in Fig. 3b, then the likelihood of cut artefacts can be expected to be lower.

In order to classify typical scenarios of the type illustrated in Fig. 3a-b, it is proposed to simulate the scheduled cutting process with a regularized cut path which consists only of a finite number of standardized cutting steps and approximates the "real" cut path 26.

Fig. 4 shows the detail 42 with the segments 44, 46 overlaid on a rectangular grid 48 which is used for regularizing the cut path 26 in one embodiment. The physical cut path 26 (dashed line in Fig. 4) comprising the segments 44 and 46 is approximated by a regularized cut path 50 which follows the edges of the grid 48 and is thus composed of a finite number of discrete cutting steps 52 consisting of edges of individual cells 54 of the grid 48. Thus, in the simulated cutting process performed on the regularized cut path 50, the choice of possible cutting directions is reduced to only four: "up", "down", "left", "right". According to an embodiment a grid resolution may vary.

As an alternative possibility for regularizing the cut path 26, Fig. 5 shows an example using a grid 48' with triangular cells 54', resulting in a regularized cut path 50' composed of simulated cutting steps 52' which correspond to the edges of the triangular cells 54'. Thus, in this embodiment, each simulated cutting step 52' can only have one of six different cutting directions (two directions per edge of the triangle).

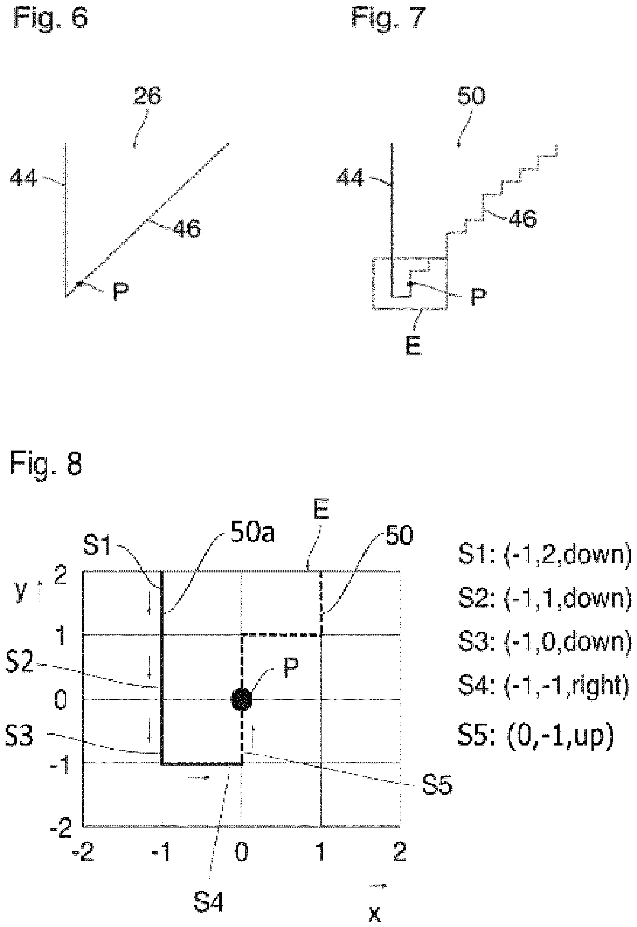

Fig. 6 shows the segments 44, 46 of the physical cut path 26 in a situation where the cutting tool has reached a specific point P on the cut path following the cut sense shown in Fig. 3a. The portion of the cut path 26 that has been shown in continuous lines in Fig. 6 is a portion on which the sheet has been cut already, whereas the portion shown in dashed lines is a portion which has still to be cut.

Fig. 7 illustrates the same situation as Fig. 6, but shows the regularized cut path 50 instead of the physical cut path 26. In order to reduce this situation to a standardized cutting problem, a standard environment E is defined around the point P, as has been shown in Fig. 7.

Fig. 8 shows the same environment E on a larger scale. In this example, the standard environment E is constituted by a 4 x 4 matrix of cells 54 of the grid 48 (Fig. 4) centered on the point P. In other embodiments, the environment E may be constituted by a smaller or larger number of cells surrounding the point P.

Fig. 8 shows not only the portion of the regularized cut path 50 in the environment E but shows also a number of individual simulated cutting steps S1 - S5 which, in the present situation, have either been cut earlier (steps S1 - S4) or are presently being performed (step S5). The respective cutting directions are indicated by arrows. It will be understood that, for the physical cut path 26, the cutting directions have been scheduled by the scheduler 34. The cutting directions for the simulated cutting steps S1 - S5 correspond to these scheduled cutting directions. The list of cutting steps S1-S5 define a cut line configuration 50a for a currently simlulated cutting step S5 leading to the point P.

Using a Cartesian x-y coordinate system with the point P as its origin, it is possible to fully describe each cutting step by its coordinates in the x-y coordinate system and by its cutting direction, as has been indicated in Fig. 8. By convention, the point P always marks the end point of the cutting step (S5) that is presently being performed. The cutting steps that have not yet been executed in this situation - i.e. that succeed the current step S5 - have not been shown in Fig. 8, because they are not relevant for the behavior of the sheet in the present cutting step S5. For clarity, the step S5 ending in P is the one that will be assessed for cut problems considering that the steps S1-S4 have already been cut. It should be noted that, other embodiments may use different conventions for the vicinity E or the position of the point P without changing the scope of the invention.

It will be observed that, in this example, the cutting sense in the present step S5 is the same as the cutting sense that has been used in the previous steps S1 - S4 as depicted in Fig. 3a and that is less preferable than the one shown in Fig. 3b which may be captured using an alternative cut path schedule that is not shown.

The sequence in which the cutting steps S1 - S5 are performed is relevant only for deciding which edges of the grid have been cut already in the situation where the cutting tool ends operating at the point P, and which edges have not been cut so far. However, the sequence in which the previous cutting steps S1 - S4 have been performed is not relevant for predicting the behavior of the sheet in the present cutting step S5. Therefore, when defining a standardized cutting problem, the sequence in which the steps S1 - S4 have been performed, and their respective cutting directions may be ignored. In the particular embodiment shown in Fig. 8, by convention, the vicinity E is rotated so that current cut step S5 is always upwards toward P as shown.

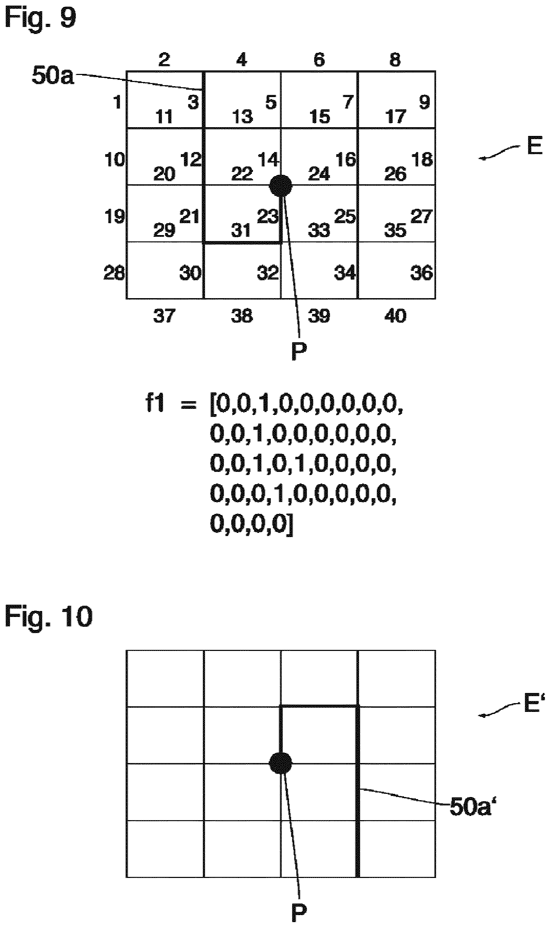

Fig. 9 shows a feature vector f1 representing a cut path configuration 50a shown in Fig. 8.. One possibility to describe the cut line configuration 50a in the environment E is to provide a vector, designated as "f1" in Fig. 9, which has as many dimensions as the environment E has grid edges (40 in this example) and to insert a "0" for each edge where no cut has been made and a "1" for each edge (on the cut path 50) where a cut has been made already or is presently being made. For uniqueness, it is necessary to define a sequence in which the edges of the environment E shall be counted. In Fig. 9, the counting sequence has been indicated by small numbers running from 1 to 40.

Using this scheme, any possible cut line configuration 50a related to a current cutting step S5 in the environment E as shown in Fig. 8 and 9 may be described fully and unambiguously by a features vector that is obtained by means of a so called boundary function that is a mapping from the list of cut path operations S1-S5 shown in Fig. 8 to a features vector such as f1 shown in Fig. 9. For clarity, the features vector f1 shown in Fig. 9 is a one to one mapping of the cut path configuration shown in Fig. 8.

The cut line configuration as identified by the vector f1 may be one feature among a number of features which, together, define the standardized cut problem. Other features defining this problem will relate to the cutting tool, the sheet properties, the fixing method, and the like, as will be explained later.

Thus, a standardized cutting problem can be defined for each point P along the regularized cut path 50 by specifying the feature f1 and the values of each of the other parameters.

The database 28 may contain a record for each of these standardized cutting problems and may indicate whether the physical cutting step that corresponds to the simulated cutting step ending at the point P would lead to an artefact.

It is possible however, to reduce the number of records in the database 28 by means of symmetry considerations. For example, Fig. 10 shows an environment E' with a cut line configuration 50a' which is the same as the cut line configuration 50a in Fig. 9, but rotated by an angle of 180° about the point P. In principle, the cut line configurations 50a and 50a' would describe different standardized cutting problems. It is conceivable, however, that the physical behavior of the sheet in the physical cutting operations that correspond to these two problems would be the same, so that, if the behavior of the sheet is known for one problem, it is also known for the "rotated" problem.

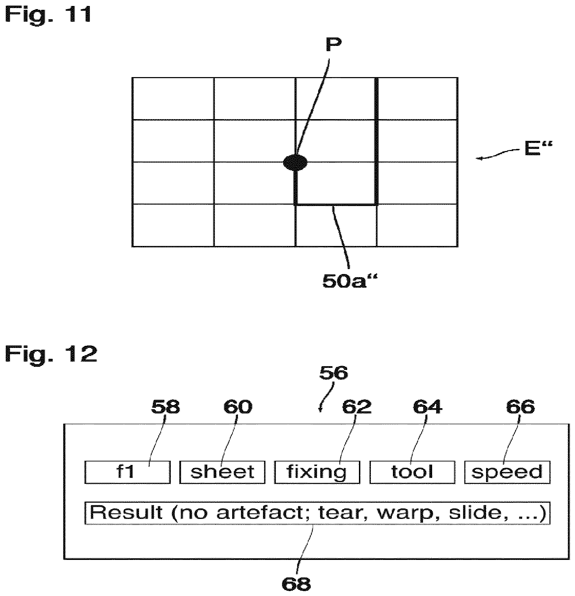

Similarly, it can be expected that the physical behavior of the sheet will be the same for other standardized cutting problems which are symmetric to the problems shown in Figs. 9 and 10. For example, Fig. 11 shows an environment E" with a cut line configuration 50a" which is the mirror image of Fig. 9 and is therefore another example of the standardized cutting problem for which the database would not provide any information that could not have been obtained already from the problem shown in Fig. 9.

In general, whenever class of cut line configurations 50a are linked together by a symmetry group of the grid 48 that has been used for regularization, i. e. a group of symmetry transformations (rotations, reflections) that preserve the grid 48 and the point P, the database 28 needs to include only one representative of this class of cut path configurations.

This rule can be applied at least as long the sheet to be cut is isotropic in its properties. If the sheet 20 is anisotropic in its bending strength or tear strength, this will reduce the number of allowed symmetry transformations.

In the example shown in Figs. 4 and 6 to 11, the grid 48 is a square grid, so that rotations by an angle of 90° about the point P would, strictly speaking, be symmetry transformations and where horizontal or vertical flips are also symmetry transformations. In other less preferable embodiments the different lengths between the edges of the grid cells and, accordingly, the difference in the length of the individual simulated cutting steps will reduce the symmetry group.

Fig. 12 shows an example of a record 56 in the database 28. One field 58 in the record contains information on the cut line configuration 50a, as represented for example by the vector f1 as defined in Fig. 9 (or rather a representative of one of the vectors f1 that are linked together by a symmetry group, as explained above).

Another field 60 in the record indicates a sheet feature that describes the properties of the sheet 20 to be cut. The sheet feature may take the form of a vector of sheet parameters that may include, for example, the sheet thickness, material specifications, bending strength of the sheet, tear strength of the sheet and the like. In another example, the sheets feature may just consist of a media type (e. g. brand) to which the sheet belongs.

Another field 62 in the record 56 contains a fixing feature, i. e. at least one parameter that describes the properties of the fixing method. In the example shown in Fig. 1, where the only fixing method is suction by means of the suction holes 18, the fixing parameter might indicate the suction pressure applied to all the suction holes 18 or at least to the suction holes within the respective standard environment E.

Another field 64 in the record 56 contains a tooling feature, i. e. a parameter or a collection of parameters describing properties of the cutting tool 24, 24'. For example, this field may specify whether the cutting tool is a kiss cut tool (knife), a laser or jet cutting tool or the like.

Another field 66 in the record 56 specifies parameters of the cutting method, e. g. the cutting speed, a feature of wobbling the cutting tool (knife) while cutting, and the like.

A result field 68 in the record 56 indicates a result of a physical (test) cutting operation that has been performed earlier and can be described by the standardized cutting problem as defined in the fields 58 - 66. The result indicated in the field 68 may be either "no artefact" or may specify and/or quantify certain types of artefact such as tear, warp, bending or stretching of the sheet, and the like.

Ideally, the database 28 would contain a record 56 for each standardized cutting problem that can be performed with the cutter 10 and with sheets 20 of any available media type. However, even if the contents of the database 28 are incomplete, artefacts can be predicted at least in those cases where suitable and similar empirical data are available and where the digital predictor module 39 shown in Fig. 2 has been arranged with regard to said data from the database 28 for extrapolating the expected result of cut problems.

Moreover, many of the features contained in the fields 58 - 66 or at least some of the parameters included in these features may be ordered by increasing tendency to produce artefacts. For example, a thin sheet is more likely to tear than a thicker sheet. Thus, if records 56 for different sheet thicknesses are available (with all other features being identical), but no empirical data are available for the thickness of the particular sheet 20 that is presently being used, it is still possible to obtain a relatively reliable result by interpolating the sheet thickness in the database. The same applies to other parameters that can be measured on a scale, such as cutting speed, suction pressure of the fixing system, and the like.

The definition of the cut line configuration 50a by means of the feature f1 as defined above may be inadequately large to be feed as such into a digital predictor module. For clarity, as known by a person skilled in the art of supervised learning, to avoid the well-known problem of "the course of dimensionality", the number and adequacy of input features to be used by a prediction module need to be correlated with the complexity of the process that is emulated. Further and due to the same problem, it is known that the higher the dimension of if input features vector the exponentially higher the number of samples required for training said prediction module and, the higher the number of training samples the lower the feasibility of this method due to engendered costs related to media waste and training time. Therefore, it is an object of this invention to propose further simplifications that avoid said course of dimensionality. The following embodiments exemplify boundary functions embodiments arranged for detecting particular cut issues.

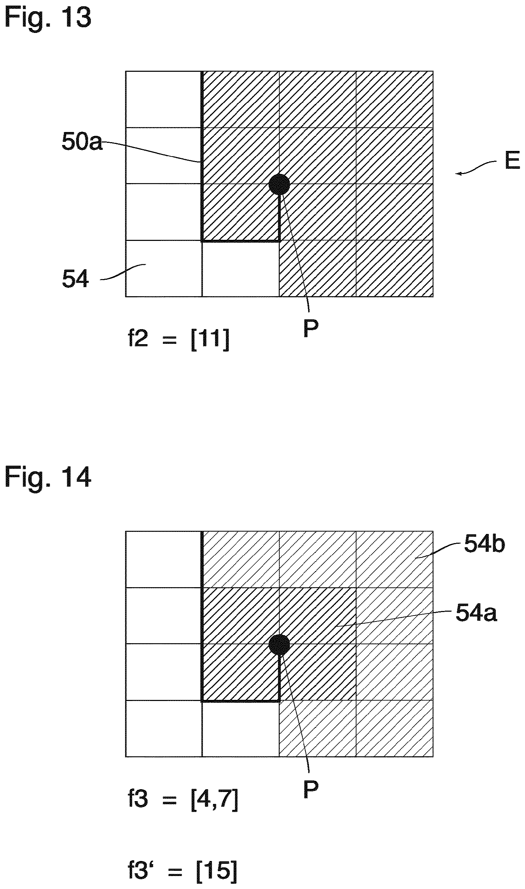

Fig. 13 illustrates a way to describe the relevant properties of the cut line configuration 50a by a simpler feature f2 obtained using a boundary function. The feature vector f2 is adequate for assessing the fixing strength. This concept is based on the consideration that each cell 54 of the grid can be assumed to include at least one support point where the sheet is fixed to the flat bed 16.

In view of the symmetry considerations explained above, it is possible to establish the convention that the cutting direction of the cutting step ending at the point P shall always be upward. When, in Fig. 13, the cutting tool moves upward to the point P to the other end of the grid edge, only the support points in the cells that have been hatched in Fig. 13 will contribute to counteracting the cutting force exerted by the cutting tool, because only the parts of the sheet that are held by the support points in these cells are directly coherent with the point of the sheet that is being severed with the cutting tool. In contrast, all the cells will have not been hatched in Fig. 13 are separated from the cutting tool by a portion of the cut line, so that they cannot help to hold the sheet at the position of the cutting tool because no forces can be transmitted across the cut line.

In general, the occurrence of a cut artefact will be less likely when the number of support points that contribute to holding the sheet at the position of the cutting tool is large. Thus, a simple measure for assessing the influence of the cut line configuration 50a is to count the number of support points or, equivalently, the number of grid cells that can be reached by following a straight line from the point P without crossing the cut line, i. e. by counting the hatched cells. In the example shown in Fig. 13, this leads to: f2 = [11].

Thus, in this embodiment, the cut line configuration is represented only by a single number between 1 and 16, in contrast to 2⁴⁰ possible values of the vector f1 as defined in Fig. 9.

In a more refined embodiment, it may be taken into account that the contribution of a support point to fixing the sheet at the position of the cutting tool will be larger when the support point is closer to the point P.

Fig. 14 illustrates an example where a distinction has been made between cells 54a which include effective support points and are separated from the point P by a distance of approximately 1 (using any suitable distance norm such the Euclidean norm, the maximum norm or the Manhattan norm), and cells 54b which are separated from the P by a distance of approximately 2. The result may then be represented by a feature f3 in the form of a two-dimensional vector having the components "4" (four cells 54a) and "7" (seven cells 54b). As an alternative, a one-dimensional vector f3' may be formed by computing a weighted sum of the counts of cells 54a, 54b. For example, if the cells 54b have the weight 1 and the cells 54a have the weight 2, then the result would be: f3' = [15].

It will be understood that many similar features may be defined in analogous ways, depending upon the required amount of accuracy. As previously mentioned a function that maps the cut line configuration 50a shown in Fig. 8 onto a feature vector such as one of the features f1, f2, f3, f3' is called a "boundary function".

It shall be understood that the embodiments previously shown in Fig. 9, Fig, 13 and Fig. 14 are provided as bare examples of boundary functions producing said feature vectors and shall not be considered as limitative to the scope of the invention since other simplifications would appear naturally to experienced flatbed cut operators able to interpret the root causes of cut problems and formalize them.

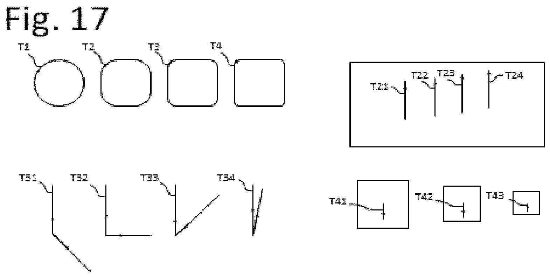

Fig. 17 shows a test program to be cut on a media sheet when calibrating the digital predictor module 39 by the calibration module 38 shown in Fig. 2 where said calibration module produces feature records 56 shown in Fig. 12 and that are to be stored on the database 28 that forms a knowledge base of standard cut problems. Said test program comprises four test pattern groups each comprising cut operations that are meant to be cut in order as such without changing the cut path schedule. Said cut operations are organized in increasing difficulty and the cut sense is marked by arrows.

A first test group T1-T4 is arranged for stressing the cut tool and the media when cutting increasingly tight corners. As a person skilled in the art of cutting would notice, the problem classes that may appear include but are not limited to: "cut blade broken" or "media shredded" which relate to a too hard to cut and respectively to a very week media.

A second group T21-T24 is arranged to stress media for tear considering that cuts starting closer to the edge are harder to cut without tearing said media.

A third group T31-T34 stress media for cutting angled corners which is also the case shown in Fig. 3 and that may lead among others to the well-known problems of "media bended" or "media tear".

A final group T41-T43 is arranged to stress the media support by cutting inside of a media patch that is smaller and smaller and that may lead among others to the problem of "media shift" due to insufficient support. Other embodiments would appear as natural to those skilled in the art. An operator has the ability to define new test cut programs for calibration of new problems.

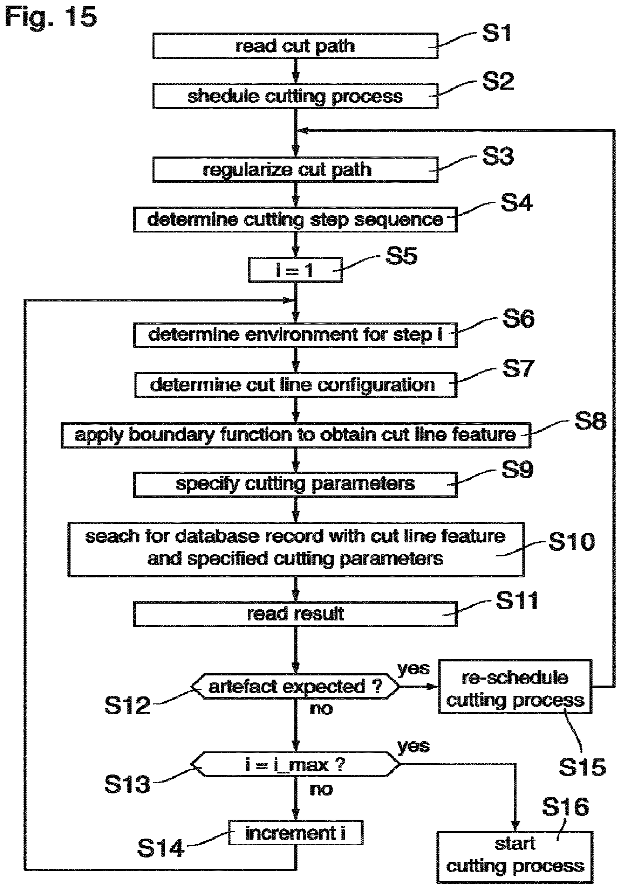

The essential steps of a method according to the invention (to be performed mainly by the pre-flight module 36) will now be described by the flow diagram shown in Fig. 15.

In step S1, the cut path module 32 is called up for reading the cut path 26. Then, in step S2, the cutting process is scheduled with the scheduler 34.

In step S3, the scheduled cut operations on the cut path 26 are regularized so as to obtain the regularized cut path 50. Then, in step S4, a sequence of simulated cutting steps to be performed on the regularized cut path 50 is inferred from the cutting process scheduled in step S2. A step count "i" is initialized (i = 1) in step S5.

In step S6, the standard environment E is determined for the cutting step i. This will yield an environment with a size of, for example, 16 grid cells around the end point P of the first simulated cutting step.

Step S7 is a step of determining the cut line configuration 50a, i. e. a step of identifying the grid edges in the environment E where a cut has already been made in one of the previous steps. Of course, in the first step, the cut line configuration will simply consist of the single grid edge where the first cut is being made and where although no previous cuts have been performed edges of the media sheet would be considered as already cut.

In Step S8, a boundary function is applied to the cut line configuration 50a in order to obtain a cut line feature such as f1, f2 or f3.

Then, based on the result of the scheduling process in step S2, the other cutting parameters which define the features of the standardized cutting problem are specified in step S9. These parameters will comprise sheet parameters, fixing parameters, tooling parameters and the like.

In step S10, the digital predictor module 39 arranged to predict with high accuracy and recall the data sotred in the data base 28 is called using as input the feature vectors which contain the cut line feature obtained in step S8 and the cutting parameters or features as specified in step S9. Upon execution, the digital predictor module 39 will produce a result that takes as value one of the domain classes indicated in the field 68. In a more advanced embodiment, the digital predictor 39 also produces a confidence level value between 0 and 1 indicating the quality of the prediction.

In step S11, the result provided by the digital predictor module 39 is read by the pre-flight module and may also be temporarily stored in a list of results.

Then it is checked in step S12 whether a cut artefact is to be expected. The check is either performed for the present simulated cutting step "i", delayed until a simulated cut step has been reached (i.e. the last one) or, when the operator decides to do so. The two most preferable embodiments are when said check is iteratively performed after each step count "i" or in the end when the step count "i" has reached its maximum value i_max case in which the check is performed on all accumulated results stored in the step S11.

If this is not the case or the check is delayed ("no"), it is checked in step S13 whether the step i has reached its maximum value i_max, i. e. whether all simulated cutting steps for the entire cut path 50 have been performed. If this is not the case ("no"), the cut count "i" is incremented by one in step S14, and the process loops back to step S6 for simulating the next cutting step. The steps S6 - S14 are repeated in a loop until the entire regularized cut path 50 has been checked for possible artefacts.

If it is found in step S12 that an artefact has to be expected ("yes"), then the simulation is preferably aborted and the scheduled cutting process is re-scheduled in step S15 in an attempt to avoid the occurrence of the artefact. This re-scheduling may be done manually by the operator or with assistance of the optimization module 40. For example, if an artefact has been found to be likely in a particular cutting step, it may be attempted to reverse the cutting direction for a segment of the cut path that adjoins the point where the simulation as been aborted. Other options to be tried could be to change the fixing method or the cutting tool. Changing the media type of the sheet 20 may also be an option if a suitable replacement media is available. The decision in step S12 may consider the result read from the prediction module in step S11 and also, in a more preferable mode, the confidence level.

Subsequent to step S15, the simulation (pre-flight) may be repeated for the re-scheduled process, starting with step S3.

If the pre-flight is not aborted before the step count "i" reaches the maximum value i_max in step S13 ("yes"), it can be concluded that an artefact is unlikely to occur, and the physical cutting process may be started in step S16.

A method of creating records 56 for the database 28 and to be used further for arranging the digital predictor 39 will now described by to the flow diagram shown in Fig. 17. The essential steps of this method may be performed automatically by the calibration module 38 shown in Fig. 2.

In step S20 that is identical to the step S1 from Fig. 15, a test cut path comprising a number of cut tests having test cut operations is read and will be used for calibration. The cut tests and cut operations are meant to be cut in the precise order of definition and preferably are organized by increasing the cut difficulty. In this case, increasing difficulty means a decreasing value of the feature f2 or f3', for example (Figs. 13, 14).

In step S21, a list of trial cutting parameters are manually set by the operator or automatically chosen by the calibration module 38 from a predefined set and, where said cutting parameters are values or features to be entered in the fields 60 to 66 in Fig. 12, and, where said list is preferably sorted by increasing "difficulty". In this context "difficulty" means the likelihood that an artefact will be produced when the present set of parameters is used. For example, the parameter "sheet thickness" will be sorted by decreasing thicknesses. Another example would be a sheet parameter "air permeability" which indicates the permeability of the sheet 20 for air. The higher the permeability is, the smaller will be the force with which the sheet is attracted by the suction holes 18, and the more likely will be the occurrence of an artefact.

Then, a test cut process with relatively low difficulty will be selected and scheduled in step S22 that is similar to the step S2 of the method shown in Fig. 15. The order and sense of cut operations is the one defined by the cut path without modifications and the cut parameters are chosen from the list of trial cut parameters from step S21.The scheduler is arranged to take from said list a combination that was not taken before in a previous scheduled trail and, more preferably, to let the operator choose a said combination or to automatically choose a combination that is has increased "difficulty" when compared to one of the already trialed schedules.

In step S23 the cut path of this test process will be regularized in the same manner as in step S3 in Fig. 15 (see Figs. 4 and 5), and a sequence of simulated cutting steps will be determined in step S24 that is also the same as the step S4 in Fig. 15.

The following steps S25 to S29 are the same as the steps S5 to S9 in Fig. 15, but are now performed on the regularized cut path that has been obtained for the test cut process. In step S29, the cutting parameters will be preferably taken from the "easy" end of the list that has been obtained by sorting in step S21.

In step S30, the cut line feature obtained in step S28 and the parameters specified in step S29 are entered into a blank record 56 of the database 28, while the result field 68 is still left empty.

Then, in step S31, a physical test cut is performed as scheduled in step S22, and the result is entered in the field 68 of the record 56 created in step S30.

In step S32, upon a detected artifact or upon the choice of the operator the current cut test may be aborted or not. If the decision is to not abort the test ("no") then it is tested in step S33 whether the step count i has reached the maximum value i_max, i. e. whether the entire test cut has been simulated. As long as this is not the case ("no"), the step count is incremented in step S33, and the process loops back to step S26 to continue with the next cutting step.

When the decision is to abort the current cut test ("yes" in step S32) or when the simulation has been completed ("yes" in step S32), then it is checked if a re-schedule is required in step S35. Said decision is made either by the operator or, preferably, automatically by the calibration module 38 when further tests with untried parameters are possible to be scheduled. When the decision is to re-schedule the test cut ("yes")then the process continues in a loop to the step S22 where a new schedule will be chosen.

It will be understood that, as far as the cut paths are concerned, the test processes scheduled in the calibration procedure are not as complex as the production cutting processes but will comprise only simple, archetypal cut paths with a focus on critical cut line configurations.

It will also be understood that, calibration samples collected in the database 28 shown in Fig. 2 may be used for training prediction module 39 using a well-known supervised learning method that is not part of the invention. It shall be also understood that in certain embodiments the database 28 may simply be omitted when the records 56 are used for "inline" training said digital predictor module 39.

## Claims

1. A method of assessing a scheduled process of cutting a sheet (20) that is fixed on a flatbed (16) of a cutter (10), along a cut path (26) that is specified by electronic cut path data, **characterized by** the steps of:
a) translating the cut path data into a regularized cut path (50) that is composed of discrete simulated cutting steps (52) and approximates the specified cut path (26);
b) determining a sequence in which the cutting steps (52) are to be performed in a simulated cutting process; and
c) for each simulated cutting step:
c1) defining a standardized cutting problem by:
c1a) specifying a standard environment (E) on a portion of the sheet surrounding a location (P) of the simulated cutting step;
c1b) identifying simulated cutting steps (S1 - S4) contained in the environment (E) and preceding the present cutting step (S5) in the sequence of simulated cutting steps; and
c1c) specifying cutting parameters including: sheet parameters indicating properties of the sheet (20) to be cut; fixing parameters indicating properties of a fixing system (18) for fixing the sheet (20) on the flatbed (16), and tooling parameters indicating properties of a cutting tool (24) to be used in the cutting step; and
c2) determining a likelihood that a cut artefact will be produced in a physical cutting step that corresponds to the simulated cutting step, the likelihood being determined by a digital predictor that extrapolates a result of the simulated cutting step considering the identified simulated cutting steps (S1 - S4) contained in the environment (E) and at least part of the specified cutting parameters,
wherein
the step c1b) is followed by a step of specifying a cut line configuration (50a) consisting of edges of grid cells (54) which are included in the environment (E) and along which the sheet has been cut in the preceding cutting steps (S1-S4), and
wherein
the method comprises a step of applying a boundary function to the cut line configuration (50a), said boundary function mapping the cut line configuration (50a) onto an n-dimensional vector (n ≥ 1) which indicates a capability of the fixing system (18) to fix the sheet (20) on the flatbed (16) at the location (P) of the cutting step, and wherein
the method comprises the step of creating feature vectors from cut trials to be used for arranging the digital predictor, the feature vectors to be used in the step c2), the step of creating feature vectors comprising the sub-steps of:
- scheduling a test cutting process;
- applying the steps a), b) and c1) to the test cutting process;
- performing a physical cutting operation corresponding to the scheduled test cutting process; and
- assessing the result of the physical cutting process and entering it into a record (56) in a database.

2. The method according to claim 1, wherein the step a) comprises overlaying the cut path (26) on a regular grid (48) and approximating the physical cut path (26) by a regularized cut path (50) that follows edges of grid cells (54) in the grid (48).

3. The method according to claim 2, wherein the grid (48) has rectangular cells (54).

4. The method according to claim 2 or 3, wherein the flatbed (16) of the cutter (10) has a raster of suction holes (18) for fixing the sheet (20) on the flatbed, and the grid (48) is adapted to the raster of the suction holes (18) such that each cell (54) contains the same number of suction holes (18), said number being at least one.

5. The method according to claim 1, wherein a class of standardized cutting problems are considered to be equivalent in that they produce an identical result when their respective cut line configurations (50a, 50a', 50a") are linked by a symmetry transformation of the grid (48).

6. A computer program product embodied on a non-transitory computer-readable medium, comprising program code which, when executed on a data processing system (12), causes the data processing system to perform the steps of the method according to any of the claims 1 to 5.

7. A cutting system comprising a cutter (10), a flatbed (16) for fixing a sheet (20) to be cut by a cutter (10), a workstation (12), a database (28), a network (14) and a number of software modules implemented in the workstation 12, the software modules arranged to execute a method according to any of the claims 1 - 5.

## Patentansprüche

1. Verfahren zum Bewerten eines geplanten Prozesses zum Schneiden eines Bogens (20), der auf einem Flachbett (16) einer Schneidvorrichtung (10) fixiert ist, entlang eines Schnittpfades (26), der durch elektronische Schnittpfaddaten spezifiziert ist, **gekennzeichnet durch** die folgenden Schritte:
a) übersetzen der Schnittpfaddaten in einen regularisierten Schnittpfad (50), der aus diskreten simulierten Schneidschritten (52) zusammengesetzt ist und den spezifizierten Schnittpfad (26) approximiert;
b) bestimmen einer Sequenz, in der die Schneidschritte (52) in einem simulierten Schneidprozess auszuführen sind; und
c) für jeden simulierten Schneidschritt:
c1) definieren eines standardisierten Schneidproblems **durch**:
c1a) spezifizieren einer Standardumgebung (E) auf einem Teil des Bogens, der einen Ort (P) des simulierten Schneidschrittes umgibt;
c1b) identifizieren simulierter Schneidschritte (S1 - S4), die in der Umgebung (E) enthalten sind und dem aktuellen Schneidschritt (S5) in der Sequenz der simulierten Schneidschritte vorangehen; und
c1c) spezifizieren von Schneidparametern einschließlich: Schneidparametern, die Eigenschaften des zu schneidenden Bogens (20) angeben; Fixierparametern, die Eigenschaften eines Fixiersystems (18) zum Fixieren des Bogens auf dem Flachbett (16) angeben, und Werkzeugparametern, die Eigenschaften eines Schneidwerkzeugs (24) angeben, das in dem Schneidschritt zu verwenden ist; und
c2) bestimmen einer Wahrscheinlichkeit, dass in einem physikalischen Schneidschritt, der dem simulierten Schneidschritt entspricht, ein Schnittartefakt erzeugt wird, wobei die Wahrscheinlichkeit **durch** ein digitales Vorhersagemodul bestimmt wird, das ein Resultat eines simulierten Schneidschrittes extrapoliert unter Berücksichtigung der identifizierten simulierten Schneidschritte (S1 - S4), die in der Umgebung (E) enthalten sind, und zumindest eines Teils der spezifizierten Schneidparameter,
wobei
auf den Schritt c1b) ein Schritt des Spezifizierens einer Schnittlinienkonfiguration (50a) folgt, die aus Kanten von Gitterzellen (54) besteht, die in der Umgebung (E) enthalten sind und entlang derer der Bogen in den vorangehenden Schneidschritten (S 1 - S4) geschnitten worden ist, und
wobei
das Verfahren einen Schritt des Anwendens einer Grenzfunktion auf die Schnittlinienkonfiguration (50a) aufweist, wobei die Grenzfunktion die Schnittlinienkonfiguration (50a) auf einen n-dimensionalen Vektor (n ≥ 1) abbildet, der eine Fähigkeit des Fixiersystems (18) angibt, den Bogen (20) an dem Ort (P) des Schneidschrittes auf dem Flachbett (16) zu fixieren, und
wobei
das Verfahren den Schritt der Erzeugung von Merkmalsvektoren aus Schnittversuchen umfasst, die für die Einrichtung des digitalen Vorhersagemoduls zu verwenden sind, die Merkmalsvektoren, die in dem Schritt c2) zu verwenden sind, wobei der Schritt der Erzeugung der Merkmalsvektoren die folgenden Teilschritte umfasst:
- planen eines Test-Schneidprozesses;
- anwenden der Schritte a), b) und c1) auf den Test-Schneidprozess;
- ausführen einer physikalischen Schneidoperation entsprechend dem geplanten Test-Schneidprozess; und
- bewerten des Ergebnisses des physikalischen Schneidprozesses und eingeben desselben in einen Datensatz (56) in einer Datenbank.

2. Verfahren nach Anspruch 1, bei dem der Schritt a) das Überlagern eines Schnittpfades (26) auf einem regelmäßigen Gitter (48) und die Approximation des physikalischen Schnittpfades (26) durch einen regularisierten Schnittpfad (50) umfasst, der Kanten von Gitterzellen (54) in dem Gitter (48) folgt.

3. Verfahren nach Anspruch 2, bei dem das Gitter (48) rechteckige Zellen (54) hat.

4. Verfahren nach Anspruch 2 oder 3, bei dem das Flachbett (16) der Schneidvorrichtung (10) ein Raster von Sauglöchern (18) zum Fixieren des Bogens (20) auf dem Flachbett hat und das Gitter (48) so an das Raster der Sauglöcher (18) angepasst ist, dass jede Zelle (54) die gleiche Anzahl an Sauglöchern (18) enthält, wobei diese Anzahl wenigstens 1 ist.

5. Verfahren nach Anspruch 1, bei dem eine Klasse von standardisierten Schneidproblemen insofern als äquivalent betrachtet werden, als sie ein identisches Resultat ergeben, wenn ihre jeweiligen Schnittlinienkonfigurationen (50a, 50a', 50a") durch eine Symmetrietransformation des Gitters (48) verknüpft sind.

6. Computerprogrammprodukt, verkörpert auf einem nichtflüchtigen, computerlesbaren Medium, mit Programmcode der, wenn er auf einem Datenverarbeitungssystem (12) ausgeführt wird, das Datenverarbeitungssystem veranlasst, die Schritte des Verfahrens nach einem der Ansprüche 1 bis 5 auszuführen.

7. Schneidsystem mit einer Schneidvorrichtung (10), einem Flachbett (16) zum Fixieren eines Bogens (20), der mit der Schneidvorrichtung (10) zu schneiden ist, einer Workstation (12), einer Datenbank (28), einem Netzwerk (14), und einer Anzahl von Softwaremodulen, die in der Workstation (12) implementiert sind, wobei die Softwaremodule dazu eingerichtet sind, ein Verfahren nach einem der Ansprüche 1 bis 5 auszuführen.

## Revendications

1. Procédé d'évaluation d'un processus programmé de découpe d'une tôle (20) qui est fixée sur un plateau (16) d'un élément de découpe (10), le long d'un trajet de découpe (26) qui est spécifié par des données de trajet de découpe électronique, **caractérisé par** les étapes consistant à :
a) traduire les données de trajet de découpe en un trajet de découpe régularisé (50) qui est composé d'étapes de découpe simulées discrètes (52) et s'approche par approximation du trajet de découpe spécifié (26) ;
b) déterminer une séquence dans laquelle les étapes de découpe (52) doivent être effectuées dans un processus de découpe simulé ; et
c) pour chaque étape de découpe simulée :
c1) définir un problème de découpe standardisé en :
c1a) spécifiant un environnement standard (E) sur une partie de la tôle entourant un emplacement (P) de l'étape de découpe simulée ;
c1b) identifiant des étapes de découpe simulées (S1-S4) contenues dans l'environnement (E) et précédant l'étape de découpe actuelle (S5) dans la séquence d'étapes de découpe simulées ; et
c1c) spécifiant des paramètres de découpe incluant : des paramètres de tôle indiquant des propriétés de la tôle (20) à découper ; des paramètres de fixation indiquant des propriétés d'un système de fixation (18) pour fixer la tôle (20) sur le plateau (16), et des paramètres d'outillage indiquant des propriétés d'un outil de découpe (24) à utiliser lors de l'étape de découpe ; et
c2) déterminer une probabilité qu'un artefact découpé soit produit lors d'une étape de découpe physique qui correspond à l'étape de découpe simulée, la probabilité étant déterminée par un prédicteur numérique qui extrapole un résultat de l'étape de découpe simulée en prenant en considération les étapes de découpe simulées identifiées (S1-S4) contenues dans l'environnement (E) et au moins une partie des paramètres de découpe spécifiés,
dans lequel
l'étape c1b) est suivie par une étape de spécification d'une configuration de ligne de découpe (50a) constituée par des bords de cellules de grille (54) qui sont incluses dans l'environnement (E) et le long desquelles la tôle a été découpée lors des étapes de découpe précédentes (S1-S4), et
dans lequel
le procédé comprend une étape d'application d'une fonction de limite à la configuration de ligne de découpe (50a), ladite fonction de limite modélisant la configuration de ligne de découpe (50a) sur un vecteur n-dimensionnel (n ≥ 1) qui indique une capacité du système de fixation (18) pour fixer la tôle (20) sur le plateau (16) au niveau de l'emplacement (P) de l'étape de découpe, et
dans lequel
le procédé comprend l'étape de création de vecteurs de caractéristiques à partir d'essais de découpe à utiliser pour agencer le prédicteur numérique, les vecteurs de caractéristiques à utiliser lors de l'étape c2), l'étape de création de vecteurs de caractéristiques comprenant les sous-étapes consistant à :
- programmer un processus de découpe test ;
- appliquer les étapes a), b) et c1) au processus de découpe test ;
- effectuer une opération de découpe physique correspondant au processus de découpe test programmé ; et
- évaluer le résultat du processus de découpe physique et le saisir dans une archive (56) dans une base de données.

2. Procédé selon la revendication 1, dans lequel l'étape a) comprend le revêtement du trajet de découpe (26) sur une grille régulière (48) et l'approche par approximation du trajet de découpe physique (26) par un trajet de découpe régularisé (50) qui suit des bords de cellules de grille (54) dans la grille (48).

3. Procédé selon la revendication 2, dans lequel la grille (48) présente des cellules rectangulaires (54).

4. Procédé selon la revendication 2 ou 3, dans lequel le plateau (16) de l'élément de découpe (10) présente une trame de trous d'aspiration (18) pour fixer la tôle (20) sur le plateau, et la grille (48) est adaptée à la trame des trous d'aspiration (18) de telle sorte que chaque cellule (54) contient le même nombre de trous d'aspiration (18), ledit nombre étant d'au moins un.

5. Procédé selon la revendication 1, dans lequel une catégorie de problèmes de découpe standardisée sont considérés comme équivalents en ce qu'ils produisent un résultat identique lorsque leurs configurations de ligne de découpe respectives (50a, 50a', 50a") sont reliées par une transformation de symétrie de la grille (48).

6. Produit de programme informatique incorporé sur un support non transitoire lisible par ordinateur, comprenant un code de programme qui, lorsqu'il est exécuté sur un système de traitement de données (12), amène le système de traitement de données à effectuer les étapes du procédé selon l'une quelconque des revendications 1 à 5.

7. Système de découpe comprenant un élément de découpe (10), un plateau (16) pour fixer une tôle (20) à découper par un élément de découpe (10), un poste de travail (12), une base de données (28), un réseau (14) et un certain nombre de modules logiciels mis en œuvre dans le poste de travail (12), les modules logiciels étant agencés pour exécuter un procédé selon l'une quelconque des revendications 1 à 5.
